# EUROPÄISCHE PATENTSCHRIFT

(11) **EP 3 409 654 B1**
(45) Veröffentlichungstag und Bekanntmachung des Hinweises auf die Patenterteilung: **30.09.2020**
(21) Anmeldenummer: 17173934.5
(22) Anmeldetag: 01.06.2017
(51) Int. Cl.: C05F 17/964, C05F 17/979

(54) **VORRICHTUNG ZUR BEHANDLUNG VON ORGANISCHEN MATERIALIEN**
DEVICE FOR THE TREATMENT OF ORGANIC MATERIALS
DISPOSITIF DE TRAITEMENT DE MATÉRIAUX ORGANIQUES

(43) Veröffentlichungstag der Anmeldung: 05.12.2018
(73) Patentinhaber: Kompoferm GmbH, 33428 Marienfeld (DE)
(72) Erfinder: Eggersmann, Karlgünter, 33428 Marienfeld (DE)
(74) Vertreter: Schober, Mirko

(56) Entgegenhaltungen:
- EP-A1- 0 710 636
- EP-A1- 2 275 763
- EP-A2- 1 847 520
- WO-A2-2006/120517
- DE-A1- 19 848 157
- FR-A1- 2 820 421

## Beschreibung

Die Erfindung betrifft eine Vorrichtung zur Behandlung von organischen Materialien nach dem Oberbegriff der Ansprüche 1 und 5 Organische Materialien werden im Folgenden auch Biomasse genannt.

Gattungsgemäße Vorrichtungen, die insbesondere als Rottetunnel ausgebildet sind, weisen in der Regel einen sogenannten Düsenboden auf, durch welchen ein Gas, insbesondere Luft, in den Innenraum des Rottetunnels zur Ausführung des aeroben Prozesses, insbesondere Rotteprozesses, eingeleitet werden kann. Der Düsenboden weist hierzu eine Mehrzahl Düsen auf, welche über entsprechende im Düsenboden vorgesehene Rohre beschickt werden. Da die zu behandelnde Biomasse unter anderem freiwerdende oder austretende Feuchtigkeit enthält, kommt es vor, dass sich in den Rohren Flüssigkeit und feste, feinkörnige Bestandteile der Biomasse ansammeln, die die Rohre und damit auch die Düsen zusetzen können. Weiterhin bildet sich insbesondere durch die Vermengung von als Umluft geführter warmer, annähernd luftfeuchtegesättigter Prozessluft und zugeführter kühlerer Frischluft Kondensat, welche sich in Leitungssystem ansammelt.

WO2006/120517 beschreibt ein Abfallbehandlungssystem, umfassend einen Behälter mit einem System (11) zur Rezirkulation der Luft, aufweisend eine Vielzahl von Lufteinlassrohren und einen Boden (13), und eine Vielzahl von Lufteinlässen(12), die innerhalb des Behälters (2) angeordnet sind.

Es wird in der Regel bei solchen Systemen ein Ventilator verwendet, der an eine Druckkammer angeschlossen ist. Die Druckkammer ist wiederum mit den im Düsenboden verlegten Rohren verbunden. Üblicherweise befindet sich der Ventilator auf dem Dach eines entsprechenden Rottetunnels und ist über eine außen an dem Rottetunnel entlang geführte Rohrleitung mit großem Durchmesser mit der Druckkammer verbunden. Um die Druckkammer folglich mit ausreichendem Prozessdruck beschicken zu können, müssen verhältnismäßig große Ventilatoren verwendet werden. Aufgrund der Länge der Zuleitungen zur Druckkammer und der Tatsache, dass große Teile der Rohrleitungssysteme sich im Freien befinden, entstehen zudem erhebliche thermische Verluste, sodass die gesamte Vorrichtung mit sehr hohem Energieaufwand betrieben werden muss.

Aufgabe der vorliegenden Erfindung ist es daher, eine Vorrichtung zur Behandlung von organischen Materialien der eingangs genannten Art anzugeben, bei welcher diese Nachteile nicht oder wenigstens in wesentlich geringerem Maße auftreten.

Gelöst wird diese Aufgabe nach einer ersten Ausführungsform durch eine Vorrichtung zur Behandlung von organischen Materialien mit den Merkmalen des Anspruchs 1, und nach einer zweiten Ausführungsform durch eine Vorrichtung zur Behandlung von organischen Materialien mit den Merkmalen des Anspruchs 5. Vorteilhafte Weiterbildungen finden sich in den abhängigen Ansprüchen.

Die erfindungsgemäße Vorrichtung zur Behandlung von organischen Materialien, insbesondere deren aerober Behandlung, bei der es sich insbesondere um einen Rottetunnel handelt, umfasst einen Düsenboden, ein Dach, wenigstens eine Rückwand und zwei Seitenwände, die den Innenraum der Vorrichtung begrenzen. Während die eine Stirnwand einer solchen Vorrichtung durch die Rückwand gebildet wird, wird die andere Stirnwand an der Vorderseite üblicherweise durch eine verschließbare Öffnung, insbesondere ein Tunneltor, verschlossen. Im Düsenboden verlaufen eine Mehrzahl Rohre, die mit im Düsenboden zum Innenraum der Vorrichtung gerichteten Düsen verbunden sind. Die Rohre sind hierbei mit einer Prozessgasvorrichtung verbunden, die dazu ausgelegt ist, die Rohre bedarfsgerecht mit einem Prozessgas, insbesondere Luft, zu versorgen. Dabei umfasst die Prozessgasvorrichtung eine Druckkammer, in der insbesondere das Prozessgas verteilt wird, und einen Ventilator. Der Ventilator ist dabei so an die Druckkammer angeschlossen, dass er diese mit Prozessgas beschicken kann. Die Druckkammer weist wiederum wenigstens einen Ausgang auf, der mit wenigstens einem der Rohre im Düsenboden, insbesondere Fluid leitend, verbunden ist, so dass das Prozessgas aus der Druckkammer in die zu beschickenden Rohre geleitet werden kann.

Gemäß der ersten Ausführungsform der vorliegenden Erfindung sind der Ventilator und die Druckkammer, insbesondere in einer Einhausung, auf dem Dach der Vorrichtung angeordnet. Dabei ist die Druckkammer über wenigstens eine in der Rückwand angeordnete Verbindungsleitung mit den Rohren, insbesondere Fluid leitend, verbunden. Dadurch, dass die Zuleitung zu den Rohren in die Rückwand der Vorrichtung gelegt ist, ergeben sich eine ganze Reihe von Vorteilen. Zum einen können Wärmeverluste minimiert werden, weil die Zuleitungen zwischen dem Ventilator und den Rohren im Düsenboden innerhalb einer zur Außenseite der Vorrichtung thermisch abschirmenden Wärmedämmung angeordnet werden können.

Bevorzugt ist vorgesehen, dass eine Mehrzahl Verbindungsleitungen in der Rückwand, insbesondere zwischen einer in oder auf der Außenseite der Rückwand vorhandenen Wärmedämmung und der zum Innenraum weisenden Innenseite der Rückwand, integriert sind. Die Anzahl der Verbindungsleitungen entspricht dabei gemäß einer besonderen Ausführungsform der Anzahl der Rohre im Düsenboden. Dies ermöglicht zum Beispiel, dass bei Bedarf lediglich einzelne Rohre im Düsenboden beschickt werden können, wenn man zum Beispiel entsprechende Schließventile an jeder der Verbindungsleitungen vorsieht.

Nach einer anderen Variante kann vorgesehen sein, dass wenigstens einige der Mehrzahl Verbindungsleitungen in der Rückwand zu wenigstens einer zusammengeführten Leitung zusammengeführt sind und die wenigstens eine zusammengeführte Leitung in die Druckkammer mündet. Auf diese Weise ist es möglich, zwar alle Rohre im Düsenboden gleichzeitig zu beschicken, die Beschickung der Verbindungsleitungen aber auf wenige Anschlüsse der Druckkammer zu verteilen. Dies ermöglicht insbesondere eine wesentlich kompaktere Bauweise der Druckkammer, die dann beispielsweise nicht mehr über die komplette Breite der Vorrichtung ausgebildet sein muss. Dies spart neben Bauraum natürlich auch Kosten, die je nach Größe der Druckkammer unterschiedlich ausfallen können.

Gemäß einer weiteren selbstständigen Lösung der erfindungsgemäßen Aufgabe entsprechend einer zweiten Ausführungsform der vorliegenden Erfindung ist vorgesehen, dass der Ventilator und die Druckkammer, insbesondere in einer Einhausung, auf der dem Innenraum abgewandten Seite der Rückwand der Vorrichtung angeordnet sind. Dabei befindet sich die Druckkammer im Bereich des Düsenbodens. Hierdurch wird insbesondere erreicht, dass Wärmeverluste durch externe Verbindungsleitungen minimiert werden können, weil die Verbindungsleitungen eingespart werden oder zumindest der Länge nach deutlich verringert werden können.

Dazu kann insbesondere vorgesehen sein, dass die Druckkammer unmittelbar an die im Düsenboden befindlichen Rohre angeschlossen ist. Auf diese Weise lassen sich die Verbindungsleitungen einsparen. Es müssen nur an der Druckkammer entsprechende Anschlussflansche bzw. wenigstens ein Anschlussflansch vorgesehen sein. Dazu kann insbesondere vorgesehen sein, dass die Druckkammer nahe der Rückwand im Bodenbereich befestigt, insbesondere angeflanscht, ist.

Weiter kann der Wärmeverlust dadurch minimiert werden, dass gemäß einer weiteren vorteilhaften Variante dieser Ausführungsform der Ventilator unmittelbar an die Druckkammer angeschlossen ist.

Insgesamt optimiert die vorliegende Erfindung in allen Ausführungsformen auch die Kondensatableitung aus der Drucckammer. Solche Kondensate bilden sich insbesondere dadurch, dass im Betrieb der Vorrichtung Frischluft (kalt) und Umluft (wärmer und feucht) gemischt werden. Diese Kondensate gelangen natürlich in die Rohre im Düsenboden, und können durch den erfindungsgemäßen Gasbeschickungsvorgang aus dem den Düsen vorgeschalteten Rohrleitungssystem ausgeleitet werden. Gleiches gilt für sich durch den Betrieb der Anlage durch die Öffnungen der Düsen im Düsenboden in die Rohre gelangenden Presswässer und festen Bestandteile. Um die Ausleitung zu optimieren, ist nach einer bevorzugten Variante aller erfindungsgemäßen Ausführungsformen vorgesehen, dass der Düsenboden von der Rückwand zur Vorderseite ein Gefälle aufweist.

Um thermische Verluste zu minimieren, kann zudem vorgesehen sein, dass die Wände der Einhausung und/oder der Düsenboden und/oder das Dach und/oder die wenigstens eine Rückwand und/oder eine oder beide Seitenwände und/oder die verschließbare Öffnung zu ihrer Außenseite hin eine Wärmedämmung aufweisen. Insbesondere werden thermische Verluste dadurch verringert, dass etwaige Verbindungsleitungen oder Rohrleitungen bezogen auf den Innenraum der Vorrichtung innerhalb des Dämmmaterials liegen.

Schließlich kann ebenso bei allen Ausführungsformen vorgesehen sein, dass die Druckkammer aus Metall gebildet ist.

Die Erfindung wird nachfolgend anhand der in den Figuren 1-6 dargestellten Ausführungsbeispielen näher erläutert.
- Figur 1 -: zeigt einen Längsschnitt durch eine erfindungsgemäße Vorrichtung gemäß einer ersten Ausführungsform, die insbesondere als Rottetunnel ausgebildet sein kann;
- Figur 2 -: zeigt einen Längsschnitt quer zur Zeichenebene von Figur 1 durch die erfindungsgemäße Vorrichtung oberhalb des Düsenbodens;
- Figur 3 -: zeigt einen Querschnitt durch die erfindungsgemäße Vorrichtung gemäß Figur 1 im Bereich der Rückwand;
- Figur 4 -: zeigt einen Querschnitt durch die erfindungsgemäße Vorrichtung gemäß Figur 1 im Bereich der Vorderseite;
- Figur 5 -: zeigt einen Längsschnitt durch eine erfindungsgemäße Vorrichtung gemäß einer zweiten Ausführungsform, die insbesondere als Rottetunnel ausgebildet sein kann,
- Figur 6 -: zeigt einen Längsschnitt quer zur Zeichenebene von Figur 5 durch die erfindungsgemäße Vorrichtung oberhalb des Düsenbodens.

Im Folgenden wird bezüglich der erfindungsgemäßen Vorrichtung der Einfachheit halber von einem Rottetunnel gesprochen. Die Erfindung ist jedoch nicht auf Vorrichtungen beschränkt, die für das Verrotten von Biomasse eingesetzt werden. Vielmehr kann Biomasse auch in ähnlichen Vorrichtungen behandelt werden, bei denen kein Rotteprozess durchgeführt wird.

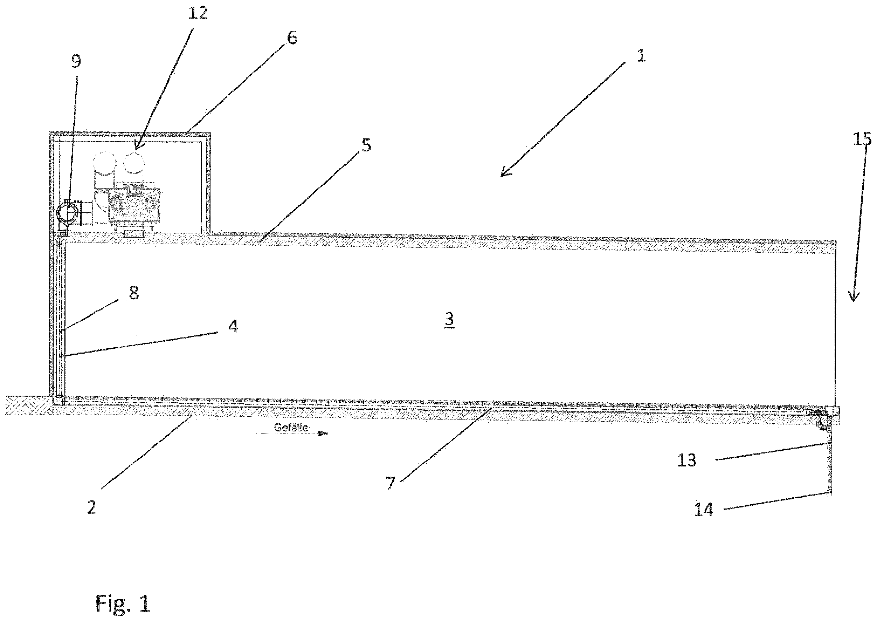

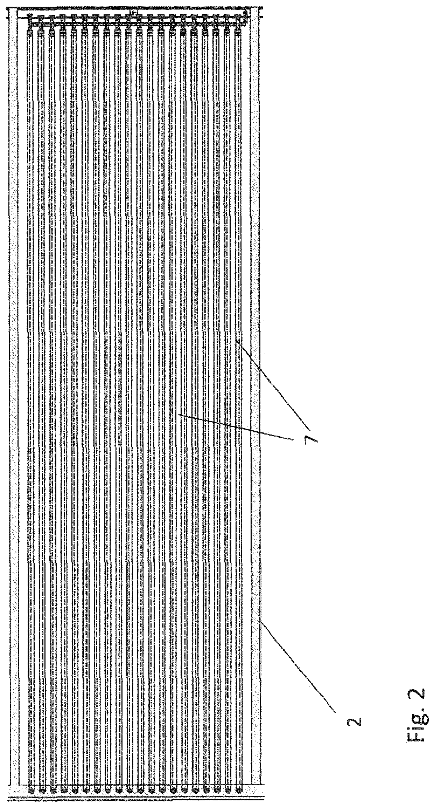

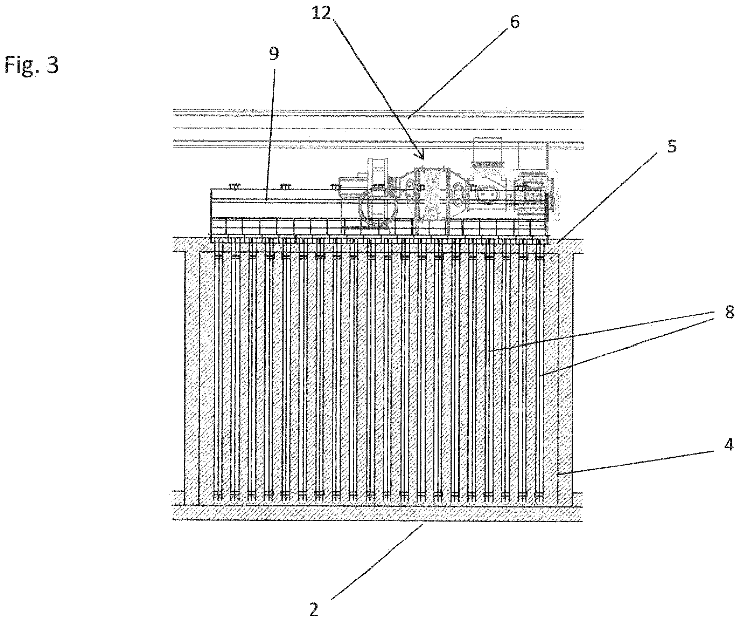

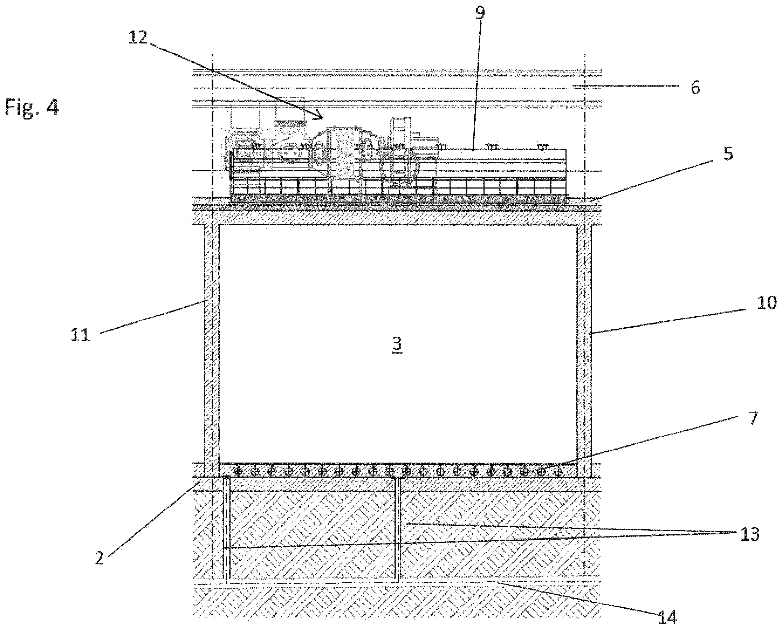

Die erfindungsgemäße Vorrichtung 1 ist in einer ersten Ausführungsform in den Figuren 1 - 4 gezeigt. Sie weist ein Dach 5, eine Rückwand 4, einen Boden 2 und Seitenwände 10, 11 auf. Das Bezugszeichen 15 kennzeichnet die gegebenenfalls verschließbare Vorderseite des Rottetunnels 1, durch die dieser mit Biomasse beladen werden kann. Die genannten Wände schließen den Innenraum 3 ein. Im Boden, der als Düsenboden 2 ausgebildet ist, verlaufen in der in Figur 1 gezeigten Längsrichtung die Rohre 7. Die Rohre 7 sind mit zum Innenraum 3 gerichteten Düsen verbunden, so dass ein Fluid (Gas oder Flüssigkeit), welches in den Rohren 7 strömt, durch die Düsen in den Innenraum 3 entweichen kann. Im gezeigten Beispiel weist der Boden 2 ein Gefälle von der Rückwand 4 zur Vorderseite 15 auf. Im Bereich der Vorderseite 15 münden die Rohre 7 in Fallleitungen 13, die wiederum in eine Sammelleitung 14 münden, über die die Ableitung eines Fluids aus den Rohren 7 möglich ist. Auf dem Dach 5 ist eine Einhausung 6 angeordnet, vorzugsweise im Bereich der Rückwand 4, wobei sich innerhalb der Einhausung 6 eine Prozessgasvorrichtung, aufweisend einen Ventilator 12 und eine daran angeschlossene Druckkammer 9, befindet. Ein Prozessgas, insbesondere Luft, welches durch den Ventilator 12 in die Druckkammer 9 eingeblasen wird, gelangt durch in der Rückwand 4 vorgesehene Verbindungsleitungen 8, die auf der einen Seite in Fluidverbindung mit der Druckkammer 9 und auf der anderen Seite in Fluidverbindung mit den Rohren 7 stehen, in die Rohre 7, so dass etwaige im Leitungssystem befindliche Kondensate sowie aus dem Innenraum 3 infolge des biomasseverarbeitenden Prozesses durch die Düsenöffnungen in die Rohre 7 gelangendes Presswasser und auch enthaltene feste Bestandteile mittels des Prozessgases aus dem Leitungssystem, insbesondere den Rohren 7, ausgeleitet werden kann. Bevorzugt ist dabei für jedes Rohr 7 im Düsenboden 2 eine entsprechende Verbindungsleitung 8 zwischen dem jeweiligen Rohr 7 und der Druckkammer 9 vorhanden.

Dadurch, dass die Wände der erfindungsgemäßen Vorrichtung gedämmt sein können, liegen die Verbindungsleitungen 8 bezogen auf den Innenraum 3 der Vorrichtung 1 innerhalb einer Dämmung. Das bedeutet, dass eine etwaige kalte Umgebung (z.B. Luft oder Feuchtigkeit) einen deutlich verringerten Einfluss auf die Verbindungsleitungen 8 nehmen kann, so dass das System aus thermischer Sicht optimiert ist.

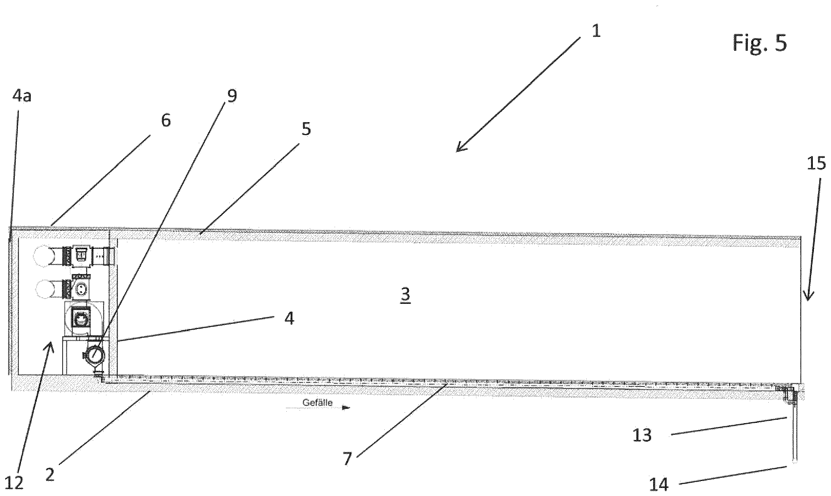

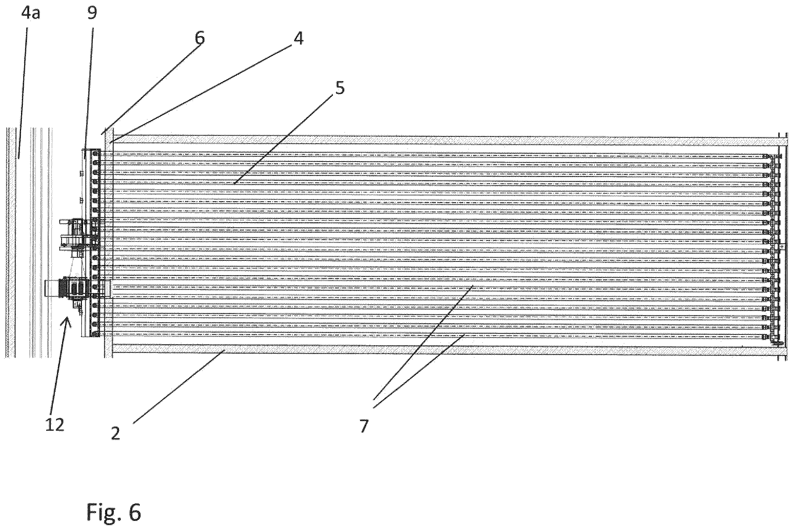

Mit der in den Figuren 5 und 6 gezeigten Ausführungsform kann ein ähnlicher Effekt erzielt werden, indem die Einhausung 6 hinter der Rückwand 4 vorgesehen ist. Innerhalb dieser Einhausung 6, die nach hinten durch eine weitere Rückwand 4a begrenzt wird, ist wieder die Prozessgasvorrichtung, aufweisend den Ventilator 12 und mit diesem verbunden auch die Druckkammer 9, angeordnet. Einerseits kann die Einhausung 6 - wie übrigens auch in dem oben genannten Beispiel - wärmegedämmt sein, so dass Wärmeverluste weitgehend vermieden werden, zudem weist diese Ausführungsform den Vorteil auf, dass die Leitungswege sehr kurz gehalten werden können, weil insbesondere auf längere Verbindungsleitungen 8 (vergleiche erste Ausführungsform gemäß Figuren 1 - 4) verzichtet werden kann. Auch hier kann ein Gefälle von der Rückwand 4, die den Innenraum 3 nach hinten begrenzt, in Richtung der Vorderseite 15 der Vorrichtung 1, auch hier nicht einschränkend beispielsweise als Rottetunnel ausgebildet, das Ausleiten von Kondensat und Presswasser und festen Bestandteilen begünstigen. Sofern gleiche Bezugszeichen verwendet sind, so wird auf die Ausführungen zur ersten Ausführungsform verwiesen.

In der vorliegenden Ausführungsform ist die Druckkammer 9 an der Rückseite der Rückwand 4 in Bodennähe angeordnet und bevorzugt am Boden nahe der Rückwand 4 angeflanscht. Die Flansche bzw. der einzelne Flansch stellen eine Fluidverbindung der Druckkammer 9 zu den Rohren 7 her. Längere Verbindungsleitungen sind daher entbehrlich. Insbesondere ist auch in dieser Ausführungsform der Ventilator 12 bevorzugt direkt an der Druckkammer 9 angeordnet, so dass auch hier etwaige Verluste durch Kurzhalten der Strömungswege minimiert werden. Auch hier gilt, dass entsprechende Dämmungen in den einzelnen oder allen Wänden, die insbesondere den Ventilator 12 und die Druckkammer 9 einschließen, die thermischen Verluste weitgehend minimieren können.

## Patentansprüche

1. Vorrichtung (1) zur Behandlung von organischen Materialien, insbesondere Rottetunnel, mit einem Düsenboden (2), einem Dach (5), wenigstens einer Rückwand (4) und zwei Seitenwänden (10, 11), die den Innenraum (3) der Vorrichtung (1) begrenzen, wobei im Düsenboden (2) eine Mehrzahl Rohre (7) verlaufen, die mit im Düsenboden (2) zum Innenraum (3) der Vorrichtung (1) gerichteten Düsen verbunden sind, wobei die Rohre (7) mit einer Prozessgasvorrichtung (12, 9) verbunden sind, die dazu ausgelegt ist, die Rohre (7) bedarfsgerecht mit einem Prozessgas, insbesondere Luft, zu beschicken, wobei die Prozessgasvorrichtung (9, 12) eine Druckkammer (9) und einen Ventilator (12) umfasst, wobei der Ventilator (12) so an die Druckkammer angeschlossen ist, dass er diese mit Prozessgas beschicken kann, wobei die Drucckammer (9) wenigstens einen Ausgang aufweist, der mit wenigstens einem der Rohre (7) im Düsenboden (2) verbunden ist, so dass das Prozessgas aus der Druckkammer (9) in die zu beschickenden Rohre (7) geleitet werden kann,
**dadurch gekennzeichnet,**
**dass** der Ventilator (12) und die Druckkammer (9), insbesondere in einer Einhausung (6), auf dem Dach (5) der Vorrichtung (1) angeordnet sind, wobei die Druckkammer (9) über wenigstens eine in der Rückwand (4) angeordnete Verbindungsleitung (8) mit den Rohren (7) verbunden ist.

2. Vorrichtung (1) nach Anspruch 1,
**dadurch gekennzeichnet,**
**dass** eine Mehrzahl Verbindungsleitungen (8) in der Rückwand (4), insbesondere zwischen einer in der Rückwand (4) vorhandenen Wärmedämmung und der zum Innenraum (3) weisenden Innenseite der Rückwand (4), integriert sind.

3. Vorrichtung (1) nach Anspruch 2,
wobei die Anzahl der Verbindungsleitungen (8) der Anzahl der Rohre (7) entspricht.

4. Vorrichtung (1) nach Anspruch 2 oder 3,
**dadurch gekennzeichnet,**
**dass** wenigstens einige der Mehrzahl Verbindungsleitungen (8) in der Rückwand (4) zu wenigstens einer zusammengeführten Leitung zusammengeführt sind und die wenigstens eine zusammengeführte Leitung in die Druckkammer (9) mündet.

5. Vorrichtung (1) zur Behandlung von organischen Materialien, insbesondere Rottetunnel, mit einem Düsenboden (2), einem Dach (5), wenigstens einer Rückwand (4) und zwei Seitenwänden (10, 11), die den Innenraum (3) der Vorrichtung (1) begrenzen, wobei im Düsenboden (2) eine Mehrzahl Rohre (7) verlaufen, die mit im Düsenboden (2) zum Innenraum (3) der Vorrichtung (1) gerichteten Düsen verbunden sind, wobei die Rohre (7) mit einer Prozessgasvorrichtung (12, 9) verbunden sind, die dazu ausgelegt ist, die Rohre (7) bedarfsgerecht mit einem Prozessgas, insbesondere Luft, zu beschicken , wobei die Prozessgasvorrichtung (9, 12) eine Druckkammer (9) und einen Ventilator (12) umfasst, wobei der Ventilator (12) so an die Druckkammer angeschlossen ist, dass er diese mit Prozessgas beschicken kann, wobei die Druckkammer (9) wenigstens einen Ausgang aufweist, der mit wenigstens einem der Rohre (7) im Düsenboden (2) verbunden ist, so dass das Prozessgas aus der Druckkammer (9) in die zu beschickenden Rohre (7) geleitet werden kann, **dadurch gekennzeichnet, dass** der Ventilator (12) und die Druckkammer (9), insbesondere in einer Einhausung (6), auf der dem Innenraum (3) abgewandten Seite der Rückwand (4) der Vorrichtung (1) angeordnet sind, wobei die Druckkammer (9) sich im Bereich des Düsenbodens (2) befindet.

6. Vorrichtung (1) nach Anspruch 5,
**dadurch gekennzeichnet,**
**dass** die Druckkammer (9) unmittelbar an die im Düsenboden (2) befindlichen Rohre (7) angeschlossen ist.

7. Vorrichtung (1) nach Anspruch 5 oder Anspruch 6,
**dadurch gekennzeichnet,**
**dass** der Ventilator (12) unmittelbar an die Druckkammer (9) angeschlossen ist.

8. Vorrichtung (1) nach einem der Ansprüche 5 - 7,
**dadurch gekennzeichnet,**
**dass** die Druckkammer nahe der Rückwand (4) im Bodenbereich befestigt, insbesondere angeflanscht, ist.

9. Vorrichtung (1) nach einem der vorigen Ansprüche,
**dadurch gekennzeichnet,**
**dass** der Düsenboden (2) von der Rückwand (4) zur Vorderseite (15) ein Gefälle aufweist.

10. Vorrichtung (1) nach einem der vorigen Ansprüche,
**dadurch gekennzeichnet,**
**dass** die Wände der Einhausung (6) und/oder der Düsenboden (2) und/oder das Dach (5) und/oder wenigstens eine Rückwand (4, 4a) und/oder eine oder beide Seitenwände (10, 11) und/oder die verschließbare Öffnung zu ihrer Außenseite hin eine Wärmedämmung aufweist/aufweisen.

11. Vorrichtung (1) nach einem der vorigen Ansprüche,
**dadurch gekennzeichnet,**
**dass** die Druckkammer (9) aus Metall gebildet ist.

## Claims

1. Device (1) for the treatment of organic materials, in particular a composting tunnel, with a nozzle base plate (2), a roof (5), at least one back wall (4) and two side walls (10, 11) which define the interior space (3) of the device (1), wherein a plurality of pipes (7) run in the nozzle base plate (2) and are connected to the nozzles which are directed in the nozzle base plate (2) towards the interior (3) of the device (1), wherein the pipes (7) are connected to a process gas device (12, 9) which is designed to load the pipes (7) when required with a process gas, in particular air, wherein the process gas device (9, 12) comprises a pressure chamber (9) and a ventilator (12), wherein the ventilator (12) is attached to the pressure chamber so that it can load the pressure chamber with process gas, wherein the pressure chamber (9) has at least one outlet which is connected to at least one of the pipes (7) in the nozzle base plate (2) so that the process gas can be directed out from the pressure chamber (9) into the pipes (7) which are to be loaded,
**characterised in that**
the ventilator (12) and the pressure chamber (9) are arranged, in particular in a housing (6), on the roof (5) of the device (1) wherein the pressure chamber (9) is connected to the pipes (7) via at least one connecting line (8) which is arranged in the back wall (4) .

2. Device (1) according to claim 1,
**characterised in that**
a plurality of connecting lines (8) are integrated in the back wall (4), in particular between a thermal insulation provided in the back wall (4), and the inside of the back wall (4) facing towards the interior space (3).

3. Device (1) according to claim 2,
wherein the number of connecting lines (8) corresponds to the number of pipes (7).

4. Device (1) according to claim 2 or 3,
**characterised in that**
at least some of the plurality of connecting lines (8) in the back wall (4) are combined into at least one combined line, and the at least one combined line opens into the pressure chamber (9).

5. Device (1) for the treatment of organic materials, in particular a composting tunnel, with a nozzle base plate (2), a roof (5), at least one back wall (4) and two side walls (10, 11) which define the interior space (3) of the device (1), wherein a plurality of pipes (7) run in the nozzle base plate (2) and are connected to nozzles which are directed in the nozzle base plate (2) towards the interior (3) of the device (1), wherein the pipes (7) are connected to a process gas device (12, 9), which is designed to charge the pipes (7) when required with a process gas, in particular air, wherein the process gas device (9, 12) comprises a pressure chamber (9) and a ventilator (12), wherein the ventilator (12) is attached to the pressure chamber so that it can load this with process gas, wherein the pressure chamber (9) has at least one outlet which is connected to at least one of the pipes (7) in the nozzle base plate (2) so that the process gas can be directed from the pressure chamber (9) into the pipes (7) which are to be loaded,
**characterised in that**
the ventilator (12) and the pressure chamber (9), are arranged, in particular in a housing (6), on the side of the back wall (4) of the device (1) facing away from the interior space (3), wherein the pressure chamber (9) is located in the region of the nozzle base plate (2) .

6. Device (1) according to claim 5,
**characterised in that**
the pressure chamber (9) is attached directly to the pipes (7) which are located in the nozzle base plate (2) .

7. Device (1) according to claim 5 or 6,
**characterised in that**
the ventilator (12) is attached directly to the pressure chamber (9).

8. Device (1) according to one of claims 5 to 7,
**characterised in that**
the pressure chamber is attached, in particular flanged, in the base region close to the back wall (4)

9. Device (1) according to one of the preceding claims,
**characterised in that**
the nozzle base plate (2) has a slope from the back wall (4) down towards the front side (15).

10. Device (1) according to one of the preceding claims,
**characterised in that**
the walls of the housing (6) and/or the nozzle base plate (2) and/or the roof (5) and/or at least one back wall (4, 4a) and/or one or both side walls (10, 11) and/or the closable opening has/have thermal insulation towards their outer side.

11. Device (1) according to one of the preceding claims,
**characterised in that**
the pressure chamber (9) is made of metal.

## Revendications

1. Dispositif (1) pour le traitement de matériaux organiques, en particulier tunnel de décomposition, avec un fond à buses (2), un toit (5), au moins une paroi arrière (4) et deux parois latérales (10. 11), qui limitent l'espace intérieur (3) du dispositif (1), sachant que, dans le fond à buses (2), s'étend une pluralité de tubes (7), lesquels sont reliés à des buses, qui, dans le fond à buses (2) du dispositif (1), sont orientées vers l'espace intérieur (3), sachant que les tubes (7) sont reliés à une installation de gaz de processus (12, 9), qui est conçue pour remplir les tubes (7) avec un gaz de processus, en particulier avec de l'air, conformément aux besoins, sachant que l'installation de gaz de processus (9, 12) comprend une chambre de compression (9) et un ventilateur (12), le ventilateur (12) étant raccordé à la chambre de compression de sorte qu'il puisse alimenter celle-ci en gaz de processus, sachant que la chambre de compression (9) présente au moins une sortie, qui est reliée à au moins l'un des tubes (7) dans le fond à buses (2), de sorte que le gaz de processus puisse être conduit de la chambre de compression (9) aux tubes (7) devant être alimentés,
**caractérisé en ce que**
le ventilateur (12) et la chambre de compression (9) sont disposés, en particulier logés dans un carter (6), sur le toit (5) du dispositif (1), sachant que la chambre de compression (9) est reliée aux tubes (7) par au moins une conduite de liaison (8) disposée dans la paroi arrière (4).

2. Dispositif (1) selon la revendication 1,
**caractérisé en ce que**
plusieurs conduites de liaison (8) sont intégrées dans la paroi arrière (4), en particulier entre une isolation thermique et la face intérieure de la paroi arrière (4) dirigée vers l'espace intérieur (3).

3. Dispositif (1) selon la revendication 2,
sachant que le nombre des conduites de liaison (8) correspond au nombre des tubes (7).

4. Dispositif (1) selon revendication 2 ou 3,
**caractérisé en ce que**
tout au moins quelques-unes des plusieurs conduites de liaison (8) sont conduites ensemble à une conduite de rassemblement, dans la paroi arrière (4), et que l'au moins une conduite de rassemblement débouche dans la chambre de compression (9).

5. Dispositif (1) pour le traitement de matériaux organiques, en particulier tunnel de décomposition, avec un fond à buses (2), un toit (5), au moins une paroi arrière (4) et deux parois latérales (10. 11), qui limitent l'espace intérieur (3) du dispositif (1), sachant que, dans le fond à buses (2), s'étend une pluralité de tubes (7), lesquels sont reliés à des buses, qui, dans le fond à buses (2), sont orientées vers l'espace intérieur (3) du dispositif (1), sachant que les tubes (7) sont reliés à une installation de gaz de processus (12, 9), qui est conçue pour remplir les tubes (7) avec un gaz de processus, en particulier avec de l'air, conformément aux besoins, sachant que l'installation de gaz de processus (9, 12) comprend une chambre de compression (9) et un ventilateur (12), le ventilateur (12) étant raccordé à la chambre de compression de sorte qu'il puisse alimenter celle-ci en gaz de processus, sachant que la chambre de compression (9) présente au moins une sortie, qui est reliée à au moins l'un des tubes (7) dans le fond à buses (2), de sorte que le gaz de processus puisse être conduit de la chambre de compression (9) jusque dans les tubes (7) devant être alimentés,
**caractérisé en ce que**
le ventilateur (12) et la chambre de compression (9) sont disposés, en particulier logés dans un carter (6), sur le côté de la paroi arrière (4) du dispositif (1), opposé à l'espace intérieur (3), sachant que la chambre de compression (9) est située dans la zone du fond à buses (2).

6. Dispositif (1) selon revendication 5,
**caractérisé en ce que**
la chambre de compression (9) est directement raccordée aux tubes (7) situés dans le fond à buses (2).

7. Dispositif (1) selon revendication 5 ou revendication 6,
**caractérisé en ce que**
le ventilateur (12) est directement raccordé à la chambre de compression (9).

8. Dispositif (1) selon l'une des revendications 5 à 7,
**caractérisé en ce que**
la chambre de compression est fixée, en particulier bridée, à proximité de la paroi arrière (4), dans la partie du fond.

9. Dispositif (1) selon l'une des revendications précédentes,
**caractérisé en ce que**
le fond à buses (2) présente une pente de la paroi arrière (4) vers le côté avant (15).

10. Dispositif (1) selon l'une des revendications précédentes,
**caractérisé en ce que**
les parois du carter (6) et / ou le fond à buses (2) et / ou le toit (5) et / ou au moins une paroi arrière (4, 4a) et / ou l'une ou les deux parois latérales (10, 11) et / ou l'ouverture fermable présente / présentent une isolation thermique vers leur côté extérieur.

11. Dispositif (1) selon l'une des revendications précédentes,
**caractérisé en ce que**
la chambre de compression (9) est fabriquée en métal.
